# EUROPÄISCHE PATENTSCHRIFT

(11) **EP 3 294 462 B1**
(45) Veröffentlichungstag und Bekanntmachung des Hinweises auf die Patenterteilung: **08.07.2020**
(21) Anmeldenummer: 16724333.6
(22) Anmeldetag: 11.05.2016
(51) Int. Cl.: B05B 7/24, B05B 9/08, F16K 17/04, F16K 11/07, B05B 12/00

(54) **SICHERHEITS- UND REGELVORRICHTUNG FÜR DRUCKBEHÄLTER UND DRUCKBEHÄLTER MIT EINER SOLCHEN SICHERHEITS- UND REGELVORRICHTUNG**
SAFETY AND CONTROL DEVICE FOR PRESSURIZED CONTAINER AND PRESSURIZED CONTAINER WITH SUCH A SAFETY AND CONTROL DEVICE
DISPOSITIF DE RÉGLAGE ET DE SÉCURITÉ POUR RÉCIPIENT SOUS PRESSION ET RÉCIPIENT SOUS PRESSION DOTÉ D'UN TEL DISPOSITIF DE RÉGLAGE ET DE SÉCURITÉ

(30) Priorität: 12.05.2015 EP 15167261
(43) Veröffentlichungstag der Anmeldung: 21.03.2018
(73) Patentinhaber: BASF Coatings GmbH, 48165 Münster (DE)
(72) Erfinder: MOEWS, Phillip, 48147 Münster (DE); SCHROEER, Andreas, 59387 Ascheberg (DE); SCHOEPS, Sibylle, Münster 48165 (DE); MEISNER, Roland, 48308 Senden (DE)
(74) Vertreter: BASF IP Association
(86) Internationale Anmeldenummer: PCT/EP2016/060523
(87) Internationale Veröffentlichungsnummer: WO 2016/180863

(56) Entgegenhaltungen:
- DE-A1- 3 125 627
- DE-B- 1 245 814
- DE-U1- 29 705 779
- FR-A- 1 369 788

## Beschreibung

Die Erfindung betrifft eine Sicherheits- und Regelvorrichtung für Druckbehälter für Applikationseinrichtungen für flüssige Medien.

Die Patentanmeldung DE 30 32 329 A1 beschreibt eine Luft-Druck- und Durchfluss-Regelventilkombination zum Steuern des Druckluftstromes in einem Druckluftkreis, der eine pneumatisch gesteuerte Vorrichtung enthält. Die Vorrichtung weist einen Regel- und Sperrventilkörper auf, der zwischen Offen- und Schließstellungen bewegbar ist. Weiterhin weist die Vorrichtung einen Durchflussregel-Ventilkörper auf, der in eine Schließstellung und in eine Offenstellung bewegbar ist. Die Vorrichtung ist für industrielle Druckluftanwendungen geeignet, bei denen ein verringerter abstromseitiger Druck erwünscht ist. Als Beispiel wird eine Anwendung genannt, bei der die Ventilkombination an beide Enden eines Druckluftzylinders anschließbar ist, um diesen entweder in einer Richtung oder in beiden Richtungen zu steuern. Der Druckluftzylinder kann in verschiedene Arten von Industriemaschinen eingebaut werden. Die Ventilkombination ist sehr aufwändig aufgebaut und ihre Anwendung für Druckbehälter für Applikationseinrichtungen für flüssige Medien wird nicht beschrieben.

In der Patentanmeldung EP 0 039 005 A1 wird eine Ventilanordnung für einen Dampfdruckkochtopf beschrieben. Hierbei wird als Druckanzeiger ein aus einer Haube heraustretender Stift eingesetzt. Eine Anwendung für Druckbehälter für Applikationseinrichtungen für flüssige Medien wird nicht beschrieben.

In dem Gebrauchsmuster DE 297 05 779 U1 wird eine Anordnung zum Versprühen von fließfähigem Material mit einem das Material enthaltenen Vorratsbehälter und mit einem Sprühkopf mit einer flexiblen Leitung, die zwischen dem Vorratsbehälter und dem Sprühkopf vorgesehen ist, beschrieben.

Applikationseinrichtungen für flüssige Medien im Sinne der vorliegenden Erfindung sind insbesondere mit Druckluft betriebene Lackierpistolen, mit denen Lacke auf ein zu lackierendes Objekt aufgebracht werden. Die Lackierpistolen weisen einen Druckbehälter auf, der mit Druckluft beaufschlagt wird. Die erfindungsgemäße Vorrichtung kann aber nicht nur bei Lackierpistolen, sondern auch allgemein bei Sprühvorrichtungen für flüssige Medien eingesetzt werden. Beispielhaft seien flüssige Klebstoffe, Imprägnierflüssigkeiten und dergleichen genannt.

Im Folgenden wird die erfindungsgemäße Vorrichtung im Zusammenhang mit Lackierpistolen beschrieben.

Spritzlackierverfahren werden beispielsweise ohne elektrostatische Lackaufladung weit verbreitet in industriellen und handwerklichen Lackierereien eingesetzt. Die Verfahren zeichnen sich gegenüber anderen Lackierverfahren vor allem dadurch aus, dass sie manuell einsetzbar sind, eine hohe Flexibilität bezüglich der Form, Größe und Werkstoffe der Lackierobjekte sowie der Lackauswahl und des Lackwechsels besitzen, mobil im Einsatz sind und relativ geringe Investitionskosten mit sich bringen (H. Kittel, "Lehrbuch der Lacke und Beschichtungen", Zweite Auflage, Band 9, S. 26-40.; S. Hirzel Verlag Stuttgart Leipzig, 2004).

Die Spritzlackierverfahren lassen sich im Wesentlichen in Druckluft-Spritzen im Hochdruck- oder Niederdruckverfahren einerseits sowie Airless-Spritzen, ohne oder mit Luftunterstützung, unterscheiden.

Als erstes Spritzlackierverfahren wurde um 1900 die pneumatische Zerstäubung bzw. das Druckluft-Spritzen entwickelt. Noch heute wird in Industrie und Handwerk die Druckluftzerstäubung am häufigsten eingesetzt. Beim Hochdruck-Spritzen, auch als konventionelles Spritzen oder pneumatisches Spritzen bezeichnet, wird zumeist mit einem Luftdruck von etwa 2 bis 7 bar gearbeitet, während beim Niederdruck-Spritzen, auch als HVLP-Spritzen ("High Volume, Low Pressure"-Spritzen bzw. Spritzen mit hohem Spritzvolumenstrom und niedrigem Druck) bezeichnet, zumeist mit einem Luftdruck von 0,2 bis 0,7 bar gearbeitet wird (H. Kittel, ibid).

Am Zerstäuberkopf strömt die Druckluft aus einer ringförmigen Öffnung, die durch eine zentrale Bohrung in der Luftkappe und der darin angeordneten Lackdüse gebildet wird. Weitere Luftstrahlen aus verschiedenen Luftkappenbohrungen dienen zur Regulierung der Strahlform sowie der Unterstützung der Zerstäubung. Durch die mit hoher Geschwindigkeit ausströmende Druckluft entsteht unmittelbar an der Lackdüsenmündung ein Unterdruckgebiet, das vor allem bei der drucklosen Lackzufuhr aus einem so genannten Saugbecher den Lackausfluss durch seine Saugwirkung unterstützt (H. Kittel, ibid).

Neben der Förderung des Lackmaterials aus einem Saugbecher besteht auch die Möglichkeit das Lackmaterial je nach Mengenbedarf und Viskosität durch Fördersysteme wie Fließbecher, Druckbehälter oder Umlaufsysteme der Spritzpistolendüse zuzuführen.

Mit einem Druckbehälter ausgestattete Lackierpistolen ermöglichen höhere Materialausflussraten als Saugbecher- oder Fließbecherpistolen. Der zu versprühende Lack befindet sich in dem Druckbehälter. Je nach Ausführungsform wird der Lack entweder direkt in den Druckbehälter gefüllt oder eine mit Lack gefüllte Kartusche wird in den Druckbehälter eingelegt. Nach dem Verschließen des Druckbehälters wird dieser an eine Druckluftzufuhr angeschlossen und mit Druck beaufschlagt.

Druckbeaufschlagte Becher für Handlackierpistolen müssen aus Sicherheitsgründen ein Sicherheitsventil, eine Sicherheitsverriegelung, eine Druckanzeige und eine Druckentlastung aufweisen. Gleichzeitig muss der Betriebsdruck des Bechers sichergestellt sein.

Das Sicherheitsventil sorgt dafür, dass auf den Becher nicht der gesamte von der Druckversorgungseinrichtung erzeugte Druck von beispielsweise 12 bar wirken kann, sondern dieser auf den maximal zulässigen Druck für den druckbeaufschlagten Becher begrenzt wird.

Die Sicherheitsverriegelung verhindert, dass ein unter Druck stehender Becher unbeabsichtigt, zum Beispiel ohne Werkzeug von der Handlackierpistole entfernt werden kann, und es so zu unkontrolliertem Materialaustritt kommt.

Die Druckanzeige zeigt dem Anwender an, wenn der Becher unter Druck steht.

Die Druckentlastung ermöglicht dem Anwender ein rasches Entlüften.

Der notwendige Betriebsdruck soll über eine Druckregelung sichergestellt werden.

Es ist Aufgabe der vorliegenden Erfindung, eine Sicherheits- und Regelvorrichtung der eingangs genannten Art anzugeben, die alle vorgenannten Funktionen erfüllt. Dabei soll die Vorrichtung einfach aufgebaut, kompakt und leicht sein. Außerdem soll die Vorrichtung einfach zu handhaben sein.

Die vorgenannten Aufgaben werden erfindungsgemäß gelöst durch eine Sicherheits- und Regelvorrichtung für Druckbehälter für Applikationseinrichtungen für flüssige Medien umfassend ein Sicherheitsventil, eine Regeleinrichtung für den Betriebsdruck, eine Druckanzeige und eine Druckentlastung sowie Mittel zum Anschluss der Vorrichtung an den Druckbehälter, wobei

die Vorrichtung ein Gehäuse aufweist, das mit einer Druckluftzufuhr und einem Luftauslass versehen ist,

innerhalb des Gehäuses ein Multifunktionsschieber angeordnet ist, der axial verschiebbar ist und von diesem umschlossen ist,

der Multifunktionsschieber einen Kanal aufweist, der mit einer zum Druckbehälter führenden Sackbohrung verbunden ist und in Abhängigkeit von der Position des Multifunktionsschiebers in der Ruhestellung nur mit der Druckluftzufuhr, in der Betriebsstellung mit der Druckluftzufuhr und dem Luftauslass und in der Entlüftungsstellung nur mit dem Luftauslass verbunden ist,

der Multifunktionsschieber an seinem der Sackbohrung entgegengesetzten Ende mit einem Stift verbunden ist, der durch eine Öffnung aus dem Gehäuse herausragt und am Ende Mittel zur Druckentlastung durch manuelle Betätigung besitzt,

in dem Gehäuse im Bereich des Stiftes eine den Stift umschließende Spiralfeder angeordnet ist, die den Multifunktionsschieber gegenüber dem Boden des Gehäuses abstützt und

Verriegelungsmittel vorhanden sind, die eine Arretierung des Stiftes in einer aus dem Gehäuse herausragenden Position ermöglichen.

Die Mittel zur Druckentlastung durch manuelle Betätigung können vorteilhaft als Hebel, Teller oder Ring ausgeführt sein, die mit den aus dem Gehäuse herausragenden Stift verbunden sind.

Die Mittel zur Druckentlastung können vorteilhaft als ein separates Bauteil ausgebildet sein, dass innerhalb der Druckluftzufuhr angeordnet ist.

Die innerhalb des Gehäuses angeordnete Spiralfeder besteht vorzugsweise aus zwei Federn mit unterschiedlicher Federrate, wobei die Feder mit der höheren Federrate kürzer ist als die Feder mit der geringeren Federrate. Hierdurch wird erreicht, dass der Multifunktionsschieber zunächst nur durch die Feder mit der geringeren Federrate gestützt wird. Erst wenn der Multifunktionsschieber unter Druckbelastung sich um einen Betrag, nämlich die Längendifferenz der beiden Federn, in Richtung auf den Boden des Gehäuses bewegt hat, kommt die Feder mit der höheren Federrate zur Wirkung. Durch diese Anordnung wird ein besonders günstiges Ansprechverhalten der Vorrichtung auf die Druckbeaufschlagung erreicht.

Eine Regelung des gewünschten Arbeitsdrucks kann durch die Auswahl von Federn mit geeigneten Federraten erfolgen.

Die Verriegelungsmittel können vorteilhaft als eine Rastnase ausgebildet sein. Die Rastnase kann bei geeigneter Anpassung an die jeweilige Lackierpistole mit dieser zusammenwirken und eine Arretierung des Multifunktionsschiebers in der herausgeschobenen Stellung bewirken. Die Rastnase kann beispielsweise auch auf dem Entlüftungshebel verschiebbar angeordnet sein und bei herausgefahrenem Stift unter den Boden des Gehäuses geschoben werden, um eine Arretierung zu erreichen.

Die Verriegelungsmittel können vorteilhaft auch als Bajonettverschluss ausgebildet sein.

Das Gehäuse kann mit dem Druckbehälter kraft-, form- oder stoffschlüssig verbunden sein.

Die Erfindung betrifft auch einen Druckbehälter, der mit einer erfindungsgemäßen Sicherheits- und Regelvorrichtung ausgestattet ist, wobei die Sicherheits- und Regelvorrichtung innerhalb des Bodens des Druckbehälters angeordnet ist und mit diesem gasdicht verbunden ist.

Im Folgenden wird die Erfindung anhand der Zeichnung näher erläutert. Es zeigen
**Figur 1** einen Schnitt durch die erfindungsgemäße Sicherheits- und Regelvorrichtung in der Ruhestellung,
**Figur 2** einen Schnitt durch die erfindungsgemäße Sicherheits- und Regelvorrichtung in der Betriebsstellung,
**Figur 3** einen Schnitt durch die erfindungsgemäße Sicherheits- und Regelvorrichtung in der Entlüftungsstellung,
**Figur 4** einen Druckbehälter, der mit einer erfindungsgemäßen Sicherheits- und Regelvorrichtung ausgestattet ist und mit einer Spritzpistole verbunden ist,
**Figur 5** einen Schnitt durch einen Druckbehälter, der mit einer erfindungsgemäßen Sicherheits- und Regelvorrichtung ausgestattet ist und mit einer Kartusche zur Aufnahme von Lackmaterial befüllt ist.
**Figur 6** eine Vergrößerung eines Teils des Schnitts durch den Druckbehälter gemäß **Figur 5** und
**Figur 7** einen 3D-Schnitt durch einen Teil eines Druckbehälters gemäß **Figur 5****,** der mit einer erfindungsgemäßen Sicherheits- und Regelvorrichtung ausgestattet ist und mit einer Kartusche zur Aufnahme von Lackmaterial befüllt ist.

Die Vorrichtung weist ein Gehäuse 1 auf, das mit einer Druckluftzufuhr 2 und einem Luftauslass 3 versehen ist. Innerhalb des Gehäuses 1 ist ein Multifunktionsschieber 4 angeordnet, der axial verschiebbar ist und von dem Gehäuse umschlossen ist. Der Innendurchmesser des Gehäuses 1 und der Außendurchmesser des Multifunktionsschiebers 4 sind so aneinander angepasst, dass einerseits der Multifunktionsschieber soweit wie technisch möglich gasdicht ist und dass andererseits die Verschiebbarkeit noch gewährleistet ist.

Der Multifunktionsschieber 4 weist einen umlaufenden Kanal 5 auf, der mit einer zum Druckbehälter führenden Sackbohrung 6 verbunden ist. Der Kanal ist in der Ruhestellung des Multifunktionsschiebers nur mit der Druckluftzufuhr 2 verbunden, in der Betriebsstellung mit der Druckluftzufuhr 2 und dem Luftauslass 3 und in der Entlüftungsstellung nur mit dem Luftauslass 3. Durch die Verbindung mit dem Luftauslass 3 in der Betriebsstellung wird erreicht, dass ein geringer Teil der Druckluft während des Betriebs durch den Luftauslass 3 entweicht. Hierdurch wird die Regelung der Vorrichtung unter Betriebsbedingungen verbessert.

Der Multifunktionsschieber 4 ist an seinem der Sackbohrung 6 entgegengesetzten Ende mit einem Stift 7 verbunden, der durch eine Öffnung aus dem Gehäuse 1 herausragt und am Ende außerhalb des Gehäuses ein Mittel zur Druckentlastung in Form eines Entlüftungshebels 8 trägt. Eine manuelle Entlüftung der Vorrichtung kann dadurch erreicht werden, dass der Entlüftungshebel gegen den Druck der Federn der Spiralfeder 9 nach unten gezogen wird und der Multifunktionsschieber in die Entlüftungsstellung gebracht wird. Durch eine Rastnase 11 als Verriegelungsmittel kann der Multifunktionsschieber 4 in der Entlüftungsstellung arretiert werden. Die Rastnase 11 wirkt entweder mit einem Teil der Spritzpistole zusammen oder sie ist auf dem Entlüftungshebel 8 verschiebbar und kann unter das Gehäuse 1 geschoben werden, um die Arretierung zu erreichen.

In dem Gehäuse 1 sind im Bereich des Stiftes diesen umschließenden Federn 9 angeordnet, die den Multifunktionsschieber 4 gegenüber dem Boden 10 des Gehäuses 1 abstützen.

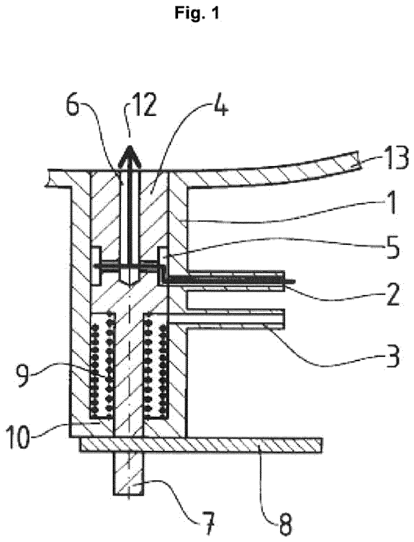

Durch die mit Pfeilen endenden Linien in den **Figuren 1** bis **3** wird der jeweils für die Druckluft freigegebene Weg angedeutet. In der **Figur 1** wird Druckluft von der Druckluftzufuhr auf den Druckbecher gegeben. Die Druckluft strömt über den Multifunktionsschieber 4 in den Druckbehälter und schiebt dabei den Multifunktionsschieber 4 gegen die beiden Federn nach unten. Dadurch schiebt sich das untere Ende des Stiftes 7 nach unten aus dem Gehäuse 1 heraus. Das aus dem Gehäuse 1 heraustretende Ende des Stiftes 7 zeigt dem Benutzer an, dass der Druckbehälter 12 unter Druck steht. Damit ist die Anforderung der Druckanzeige erfüllt.

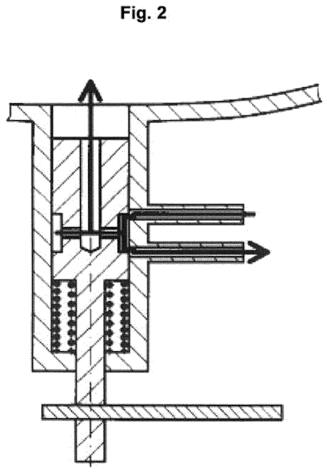

Die beiden Federn 9 sind derart ausgelegt, dass der Multifunktionsschieber 4 bei Erreichen des Betriebsdrucks soweit nach unten geschoben ist, dass die Luftzufuhr mit dem Luftauslass verbunden ist, wie dies in **Figur 2** dargestellt ist. Ein geringer Teil der Druckluft wird jetzt durch den Luftausgangskanal direkt wieder abgeführt. Dadurch wird verhindert, dass die Luftsäule auf der Luftzufuhrseite bei jedem Spritzstart voll beschleunigt werden muss und dadurch der Regler instabil wird.

Durch die konstruktive Ausbildung ist es nicht möglich, dass ein höherer Druck als der Betriebsdruck im Druckbehälter aufgebaut wird. Die Funktion eines Sicherheitsventils ist dadurch gegeben.

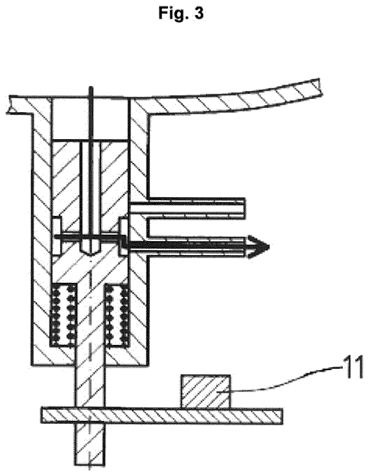

Zum Entlüften zieht der Lackierer den Multifunktionsschieber 4 über den Hebel nach unten heraus und arretiert ihn z.B. mittels einer Rastnase 11. Nun gelangt keine Druckluft mehr in den Druckbehälter, da die Zuleitung verschlossen ist. Der Druck wird über den Luftauslass 3 abgebaut und der Druckbehälter wird jetzt drucklos (s. **Figur 3**).

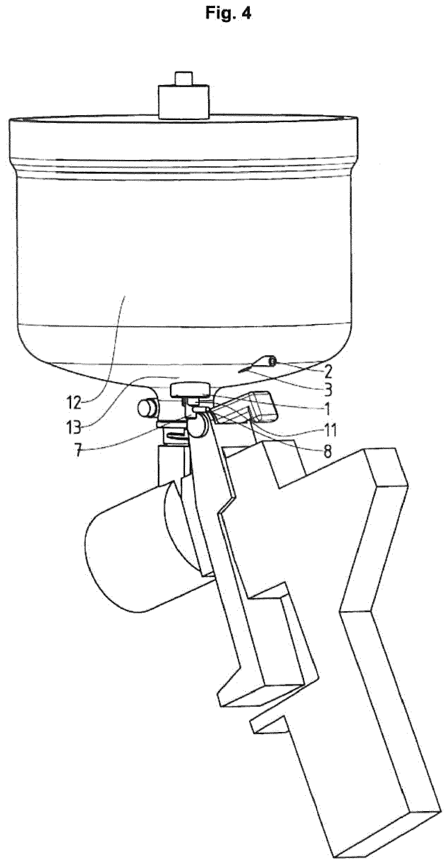

Die Funktion der Sicherheitsverriegelung wird folgendermaßen gewährleistet:
Die Sicherheits- und Regelvorrichtung ist innerhalb des Bodens 13 des Druckbehälters 12 angeordnet. Wenn der Druckbehälter 12 unter Druck steht, ragt das untere Ende des Stiftes 7 aus dem Gehäuse 1 nach unten heraus. In **Figur 4** ist erkennbar, dass das herausragende Ende des Stiftes 7 bei einem Versuch, den Druckbehälter 12 unter Druck von der Handlackierpistole abzuschrauben, gegen die Lackierpistole stößt. Damit ist ein Verdrehen des Druckbehälters 12 nicht mehr möglich. Sobald die Druckluftversorgung abgesperrt ist oder der Druckluftschlauch entfernt worden ist, wird der Druckbehälter drucklos und das untere Ende des Stiftes 7 zieht sich wieder in das Gehäuse 1 zurück. Der Druckbehälter 12 kann jetzt von der Handlackierpistole abgeschraubt werden. Damit ist die Sicherheitsfunktion erfüllt.

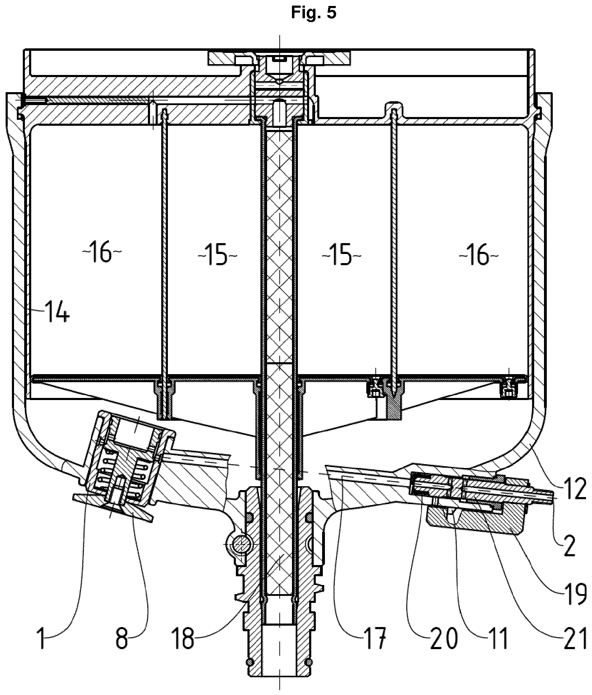

**Figur 5** zeigt die Sicherheits- und Regelvorrichtung in Verbindung mit einem Druckbehälter 12, in den eine Kartusche 14 zur Aufnahme von Lackmaterial eingelegt ist. Es handelt sich hierbei um eine Kartusche für 2-Komponenten-Lacke. Die Komponenten des Lacks werden von den konzentrisch angeordneten Kammern 15 und 16 aufgenommen.

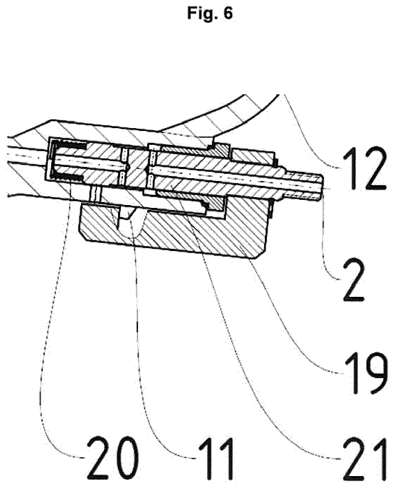

Die Mittel zur Druckentlastung als separates Bauteil 21 sind mit dem Schlitten 19 verbunden. Sie sind bei der Ausführungsform gemäß **Figur 5** innerhalb der Druckluftzufuhr 2 angeordnet und über einen Kanal 17 mit dem Gehäuse 1 verbunden. Zur Entlüftung wird der Schlitten 19 von der Rastnase 11 gelöst. Über die Feder 20 werden die Mittel zur Druckentlastung als separates Bauteil 21 zurückgeschoben und der Druckbehälter 12 entlüftet. Wird versucht, den Druckbehälter 12 unter Druck von der Handlackierpistole abzuschrauben, schlägt der Schlitten 19 am Pistolenkörper an. Der Schlitten 19 wird bei weiterem Verdrehen aus der Rastnase 11 geschoben. Die Mittel zur Druckentlastung als separates Bauteil 21 werden dann durch die Feder 20 zurückgeschoben und der Druckbehälter 12 zwangsentlüftet. In **Figur 6** ist dieser relevante Ausschnitt aus **Figur 5** vergrößert dargestellt.

Zusätzlich weist die Vorrichtung Mittel zur Druckentlastung 8 auf, welche die Funktion eines Entlüftungshebels erfüllen, und über die ebenfalls eine Druckentlüftung bewirkt werden kann.

Wenn der Druckbehälter 12 mit Druck beaufschlagt wird, werden die Komponenten des Lacks durch einen statischen Mischer 18 der Spritzpistole zugeführt.

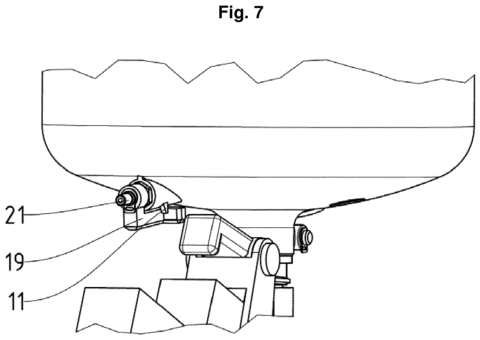

**Figur 7** zeigt einen 3D-Schnitt durch einen Teil eines Druckbehälters gemäß **Figur 5****,** der mit einer erfindungsgemäßen Sicherheits- und Regelvorrichtung ausgestattet ist und mit einer Kartusche zur Aufnahme von Lackmaterial befüllt ist und zeigt die Position des Schlittens 19, der Mittel zur Druckentlastung 21 und der Rastnase 11.

### Bezugszeichenliste

1. Gehäuse
2. Druckluftzufuhr
3. Luftauslass
4. Multifunktionsschieber
5. Kanal
6. Sackbohrung
7. Stift
8. Mittel zur Druckentlastung
9. Spiralfeder, ausgebildet als zwei Federn
10. Boden des Gehäuses
11. Verriegelungsmittel in Form einer Rastnase
12. Druckbehälter
13. Boden des Druckbehälters
14. Kartusche
15. Kammer
16. Kammer
17.Kanal
18.Mischer
19. Schlitten
20. Feder
21.Mittel zur Druckentlastung als separates Bauteil

## Patentansprüche

1. Sicherheits- und Regelvorrichtung für Druckbehälter für
Applikationseinrichtungen für flüssige Medien umfassend ein Sicherheitsventil, eine Regeleinrichtung für den Betriebsdruck, eine Druckanzeige und eine Druckentlastung sowie Mittel zum Anschluss der Vorrichtung an den Druckbehälter, wobei
die Vorrichtung ein Gehäuse (1) aufweist, das mit einer Druckluftzufuhr (2) und einem Luftauslass (3) versehen ist,
innerhalb des Gehäuses (1) ein Multifunktionsschieber (4) angeordnet ist, der axial verschiebbar ist und von diesem umschlossen ist,
der Multifunktionsschieber (4) einen Kanal (5) aufweist, der mit einer zum Druckbehälter führenden Sackbohrung (6) verbunden ist und in Abhängigkeit von der Position des Multifunktionsschiebers (4) in der Ruhestellung nur mit der Druckluftzufuhr (2), in der Betriebsstellung mit der Druckluftzufuhr (2) und dem Luftauslass (3) und in der Entlüftungsstellung nur mit dem Luftauslass (3) verbunden ist,
der Multifunktionsschieber (4) an seinem der Sackbohrung (6) entgegengesetzten Ende mit einem Stift (7) verbunden ist, der durch eine Öffnung aus dem Gehäuse (1) herausragt und am Ende Mittel (8) zur Druckentlastung durch manuelle Betätigung besitzt,
in dem Gehäuse (1) im Bereich des Stiftes (7) eine den Stift (7) umschließende Spiralfeder (9) angeordnet ist, die den Multifunktionsschieber (4) gegenüber dem Boden (10) des Gehäuses (1) abstützt und
Verriegelungsmittel (11) vorhanden sind, die eine Arretierung des Stiftes (7) in einer aus dem Gehäuse (1) herausragenden Position ermöglichen.

2. Sicherheits- und Regelvorrichtung nach Anspruch 1, **dadurch gekennzeichnet, dass** die Mittel (8) zur Druckentlastung durch manuelle Betätigung als Hebel, Teller oder Ring ausgeführt sind.

3. Sicherheits- und Regelvorrichtung nach Anspruch 1 oder 2, **dadurch gekennzeichnet, dass** die Spiralfeder (9) aus zwei Federn mit unterschiedlicher Federrate ausgebildet ist, wobei die Feder mit der höheren Federrate kürzer ist als die Feder mit der geringeren Federrate.

4. Sicherheits- und Regelvorrichtung nach Anspruch 1 bis 3, **dadurch gekennzeichnet, dass** die Verriegelungsmittel (11) als eine Rastnase ausgebildet sind.

5. Sicherheits- und Regelvorrichtung nach Anspruch 1 bis 3, **dadurch gekennzeichnet, dass** die Verriegelungsmittel (11) als Bajonettverschluss ausgebildet sind.

6. Sicherheits- und Regelvorrichtung nach Anspruch 1 bis 5, **dadurch gekennzeichnet, dass** das Gehäuse mit dem Druckbehälter (12) kraft-, form- oder stoffschlüssig (13) verbunden ist.

7. Druckbehälter mit einer Sicherheits- und Regelvorrichtung nach Anspruch 1 bis 6, **dadurch gekennzeichnet, dass** die Sicherheits- und Regelvorrichtung innerhalb des Bodens (13) des Druckbehälters (12) angeordnet ist und mit diesem gasdicht verbunden ist.

## Claims

1. Safety and control device for pressure vessels for application devices for liquid media comprising a safety valve, a control device for the operating pressure, a pressure indicator and a pressure relief as well as means for connecting the device to the pressure vessel,
the device having a housing (1), which is provided with a compressed air supply (2) and an air outlet (3),
a multifunctional slide (4) being arranged within the housing (1), said slide being axially displaceable and enclosed by said housing,
the multifunctional slide (4) having a channel (5), which is connected to a blind bore (6) leading to the pressure vessel and, depending on the position of the multifunctional slide (4), in the rest position is only connected to the compressed air supply (2), in the operating position is connected to the compressed air supply (2) and the air outlet (3) and in the venting position is only connected to the air outlet (3),
the multifunctional slide (4) being connected at its end opposite from the blind bore (6) to a pin (7), which protrudes from the housing (1) through an opening and at the end has means (8) for relieving the pressure by manual actuation,
a spiral spring (9) that encloses the pin (7) and supports the multifunctional slide (4) with respect to the bottom (10) of the housing (1) being arranged in the housing (1) in the region of the pin (7), and
there being locking means (11), which make it possible for the pin (7) to be arrested in a position protruding from the housing (1).

2. Safety and control device according to Claim 1, **characterized in that** the means (8) for relieving the pressure by manual actuation are configured as a lever, plate or ring.

3. Safety and control device according to Claim 1 or 2, **characterized in that** the spiral spring (9) is formed by two springs with different spring rates, the spring with the higher spring rate being shorter than the spring with the lower spring rate.

4. Safety and control device according to Claims 1 to 3, **characterized in that** the locking means (11) are formed as a catch.

5. Safety and control device according to Claims 1 to 3, **characterized in that** the locking means (11) are formed as a bayonet fastener.

6. Safety and control device according to Claims 1 to 5, **characterized in that** the housing is connected to the pressure vessel (12) in a force-fitting, form-fitting or material-bonding manner (13).

7. Pressure vessel with a safety and control device according to Claims 1 to 6, **characterized in that** the safety and control device is arranged within the bottom (13) of the pressure vessel (12) and is connected to it in a gastight manner.

## Revendications

1. Dispositif de sécurité et de régulation pour un récipient sous pression pour des installations d'application de milieux liquides, comprenant une soupape de sûreté, un dispositif de régulation pour la pression de service, un indicateur de pression et un détendeur ainsi que des moyens pour raccorder le dispositif au récipient sous pression,
le dispositif présentant un boîtier (1) muni d'une entrée d'air comprimé (2) et d'une sortie d'air (3), une vanne multifonction (4) pouvant être déplacée axialement étant disposée à l'intérieur du boîtier (1) et entourée par celui-ci,
la vanne multifonction (4) présentant un canal (5) qui est relié à un trou borgne (6) menant au récipient sous pression, et en fonction de la position de la vanne multifonction (4), est relié dans la position de repos uniquement à l'entrée d'air comprimé (2), dans la position de service à l'entrée d'air comprimé (2) et à la sortie d'air (3), et dans la position d'aération uniquement à la sortie d'air (3),
la vanne multifonction (4), à son extrémité opposée au trou borgne (6), étant reliée à une broche (7) dépassant du boîtier (1) à travers une ouverture et possédant à l'extrémité des moyens (8) de décompression par actionnement manuel,
dans le boîtier (1), au niveau de la broche (7), un ressort en spirale (9) entourant la broche (7) étant disposé qui soutient la vanne multifonction (4) par rapport au fond (10) du boîtier (1), et
des moyens de verrouillage (11) existant qui permettent un blocage de la broche (7) dans une position dépassant du boîtier (1).

2. Dispositif de sécurité et de régulation selon la revendication 1, **caractérisé en ce que** les moyens (8) de décompression par actionnement manuel sont réalisés sous forme de levier, de plateau ou d'anneau.

3. Dispositif de sécurité et de régulation selon la revendication 1 ou 2, **caractérisé en ce que** le ressort en spirale (9) est réalisé à partir de deux ressorts à constante de ressort différente, le ressort à constante de ressort supérieure étant plus court que le ressort à constante de ressort inférieure.

4. Dispositif de sécurité et de régulation selon les revendications 1 à 3, **caractérisé en ce que** les moyens de verrouillage (11) sont réalisés sous forme d'ergot d'encliquetage.

5. Dispositif de sécurité et de régulation selon les revendications 1 à 3, **caractérisé en ce que** les moyens de verrouillage (11) sont réalisés sous forme de joint à baïonnette.

6. Dispositif de sécurité et de régulation selon les revendications 1 à 5, **caractérisé en ce que** le boîtier est relié au récipient sous pression (12) par adhérence, par complémentarité de forme ou par liaison de matière (13).

7. Récipient sous pression avec un dispositif de sécurité et de régulation selon les revendications 1 à 6, **caractérisé en ce que** le dispositif de sécurité et de régulation est disposé à l'intérieur du fond (13) du récipient sous pression (12) et relié à celui-ci de manière étanche au gaz.
